(19) **Europäisches Patentamt**

**European Patent Office**

**Office européen des brevets**

(11) Veröffentlichungsnummer: **0 305 784 B1**

(12) # EUROPÄISCHE PATENTSCHRIFT

(45) Veröffentlichungstag der Patentschrift: **25.11.92**

(21) Anmeldenummer: **88113072.8**

(22) Anmeldetag: **11.08.88**

(51) Int. Cl.⁵: **B41J 11/32**, B41J 11/26

(54) Transporteinrichtung zum Transport eines Aufzeichnungsträgers durch einen Drucker.

(30) Priorität: **31.08.87 DE 8711771 U**

(43) Veröffentlichungstag der Anmeldung:
**08.03.89 Patentblatt 89/10**

(45) Bekanntmachung des Hinweises auf die
Patenterteilung:
**25.11.92 Patentblatt 92/48**

(84) Benannte Vertragsstaaten:
**DE FR GB IT**

(56) Entgegenhaltungen:
**EP-A- 0 207 494**
**DE-A- 3 141 458**
**US-A- 2 393 471**
**US-A- 3 877 368**
**US-A- 4 614 287**

(73) Patentinhaber: **Siemens Nixdorf Informationssysteme Aktiengesellschaft
Fürstenallee 7
W-4790 Paderborn(DE)**

(72) Erfinder: **Bräutigam, Alfons
Hölternstrasse 13
W-4790 Paderborn(DE)**

(74) Vertreter: **Fuchs, Franz-Josef, Dr.-Ing.
Postfach 22 13 17
W-8000 München 22(DE)**

## Beschreibung

Die Erfindung betrifft eine Transporteinrichtung der im Oberbegriff des Anspruches 1 genannten Art.

Derartige Transporteinrichtungen besitzen wenigstens einen, im allgemeinen aber zwei Traktoren, die in Randlochungen des Aufzeichnungsträgers eingreifen und diesen zum Beispiel in Zeilenschritten weitertransportieren. Um die Transporteinrichtung an unterschiedliche Aufzeichnungsträgerbreiten anpassen zu können, sind die Traktoren in Breitenrichtung des Aufzeichnungsträgers verstellbar. Neben dem Traktor - oder bei Vorhandensein von zwei Traktoren zwischen diesen - ist eine als Auflage für den Aufzeichnungsträger dienende Stützeinrichtung vorgesehen, die sich bei seitlicher Verstellung des oder der Traktoren federnd zusammendrücken läßt.

Es ist bereits bekannt, als Stützeinrichtung mehrere in Form und Größe den Traktoren entsprechende, ebenfalls in seitlicher Richtung verstellbare Stützelemente zu verwenden, die untereinander und zu den Traktoren durch in Verstellrichtung wirkende Federn auf Abstand gehalten werden (DE-PS 35 24 010). Bei einer seitlichen Verstellung der Traktoren verteilt sich der Verstellweg automatisch auf alle in Reihe hintereinander liegende Federn, so daß sich die Stützelemente automatisch gleichmäßig über die Stützbreite verteilen. Eine Verstellung der Traktoren hat demnach eine automatische Anpassung dieser Stützeinrichtung an die Aufzeichnungsträgerbreite zur Folge. Diese bekannte Stützeinrichtung besteht aus verhältnismäßig vielen Einzelteilen, so daß sie sowohl herstellungstechnisch als auch montagetechnisch aufwendig und teuer ist. Ein weiterer Nachteil der bekannten Stützeinrichtung wird auch darin gesehen, daß vor allem bei einer für große Aufzeichnungsträgerbreiten passenden Einstellung zwischen den einzelnen Stützelementen große Abstände bestehen, so daß der Aufzeichnungsträger vor allem dann, wenn er z. B. aus sehr dünnem Papiermaterial besteht, unter Umständen zwischen den Stützpunkten durchhängt.

Es ist die Aufgabe der vorliegenden Erfindung, eine Transporteinrichtung der im Oberbegriff des Anspruches 1 genannten Art zu schaffen, die herstellungstechnisch und montagetechnisch sehr einfach und damit preiswert ist und die bei allen Breiteneinstellungen der Traktoren eine verbesserte Unterstützung des Aufzeichnungsträgers erlaubt.

Diese Aufgabe ist erfindungsgemäß durch die im Kennzeichen des Anspruches 1 genannten Merkmale gelöst.

Der Bügel liegt im wesentlichen in der Stützebene und ist um senkrecht zu dieser Stützebene stehende Krümmungsachsen gekrümmt. Da er aus elastisch biegsamem Material besteht, kann er ohne weiteres in Verstellrichtung der Traktoren federnd zusammengedrückt werden, so daß er sich an die Stellung der Traktoren jeweils automatisch anpaßt.

Der Bügel kann aus mehreren Bügelabschnitten zusammengesetzt sein; eine herstellungstechnisch und montagetechnisch besonders einfache Lösung ergibt sich jedoch dann, wenn der Bügel einstückig ist. Er kann dann in einem einzigen Montageschritt an der im Drucker vorgesehenen Stelle montiert werden.

Der Bügel läßt sich in einfacher Weise so ausbilden, daß der Aufzeichnungsträger auch bei großer Breite an vielen eng zusammenliegenden Punkten unterstützt wird. In einer Ausgestaltung der Erfindung ist jedoch vorgesehen, daß der Bügel so profiliert ist, daß er die Transportebene längs einer kontinuierlichen Stützlinie berührt, so daß der Aufzeichnungsträger bei allen Traktorstellungen über seine gesamte Breite untersützt wird.

In einer bevorzugten Ausgestaltung der Erfindung ist der Bügel wellenförmig mit einer in Breitenrichtung des Aufzeichnungsträgers verlaufenden Wellenachse gebogen. Die Wellenform ermöglicht in besonders einfacher Weise, dem Bügel in Breitenrichtung des Aufzeichnungsträgers eine ausreichende Elastizität zu geben. In weiterer Ausgestaltung der Erfindung ist vorgesehen, daß der Bügel mit den einem Traktor jeweils zugewandten Enden an diesem anliegt. Der Bügel nimmt auf diese Weise bei allen Traktorstellungen automatisch eine die gesamte Aufzeichnungsträgerbreite überbrückende Form an, so daß der Aufzeichnungsträger immer lückenlos unterstützt wird. Bei einer Anordnung mit zwei auf wenigstens einer gemeinsamen Halteschiene angeordneten Traktoren ist der Bügel zwischen diesen Traktoren federnd eingespannt. In weiterer Ausgestaltung der Erfindung ist dann vorgesehen, daß der Bügel an der gemeinsamen Halteschiene in Richtung der Schienenachse verschieblich geführt ist. Damit ist sichergestellt, daß der Bügel sich nicht aus der Stützebene herauswölben kann. Konstruktiv wird diese Aufgabe vorzugsweise dadurch gelöst, daß der Bügel wenigstens eine in Erstreckungsrichtung verlaufende Reihe von miteinander fluchtenden Führungsösen aufweist, die auf eine zugeordnete Halteschiene aufgefädelt sind. Bei einer Transporteinrichtung mit auf zwei gemeinsamen, parallelen Halteschienen angeordneten Riementraktoren ist dementsprechend in einer weiteren Ausgestaltung der Erfindung vorgesehen, daß der Bügel zwei parallele Reihen von jeweils miteinander fluchtenden, jeweils auf eine der beiden Halteschienen aufgefädelten Führungsösen aufweist.

In bevorzugter Ausgestaltung der Erfindung ist der Bügel aus einem auf der Stützebene hochkant stehenden Band gebildet, welches in der vorbeschriebenen Weise wellenförmig gebogen ist und über das Band durchsetzende Durchbrechungen auf den Halteschienen aufgefädelt ist. Wenn eine der Halteschienen beispielsweise als beiden Traktoren gemeinsame Antriebswelle ausgebildet ist, dann umgeben zumindest die der Antriebswelle zugeordneten Führungsösen diese Antriebswelle mit Spiel, um eine Reibung zwischen Antriebswelle und Bügel zu vermeiden.

Die Form und Abmessungen des Bügels sind vorzugsweise so gewählt, daß bei kleinstmöglichem Abstand der Riementraktoren die den Bügel begrenzenden Hüllinien im wesentlichen ein Rechteck mit einer dem Abstand der Traktoren entsprechenden Breite und einer der Länge der Traktoren entsprechenden Länge bilden. Dieses Rechteck stellt die durch die Größe und Form der Riementraktoren definierte Unterstützungsfläche für den Aufzeichnungsträger dar. Bei einer Vergrößerung des Traktorenabstandes verringert sich die Länge dieses Rechteckes geringfügig, was jedoch nicht weiter ins Gewicht fällt, wie anhand des Ausführungsbeispiels noch erläutert wird.

Der Bügel kann in Abwandlung der beschriebenen Formen beispielsweise auch die Form eines offenen Bogens, einer geschlossenen Elipse oder dergleichen haben, solange nur gewährleistet ist, daß er sich in Verstellrichtung der Traktoren zusammendrücken läßt.

Ein Ausführungsbeispiel der Erfindung ist in der Zeichnung dargestellt und in der Beschreibung näher beschrieben. Es zeigen:

Fig. 1 schematisch in einer Draufsicht eine Transporteinrichtung mit zwei auf eine große Aufzeichnungsträgerbreite eingestellten Traktoren;

Fig. 2 eine Transporteinrichtung gemäß Fig. 1 mit auf kleine Aufzeichnungsträgerbreite eingestellten Traktoren;

Fig. 3 in perspektivischer Darstellung eine Einzelheit der Transporteinrichtung gemäß Fig. 1 und 2.

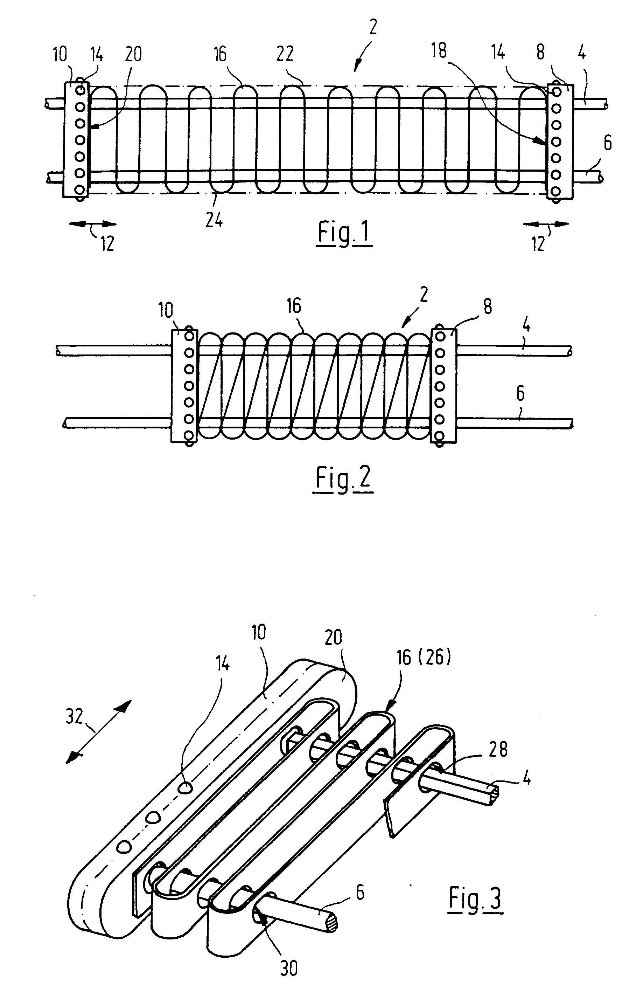

Die in Fig. 1 dargestellte Transporteinrichtung 2 umfaßt zwei Halteschienen 4, 6 , auf denen zwei Traktoren 8, 10 in Richtung der Pfeile 12 verschiebbar angeordnet sind, um diese an unterschiedliche Aufzeichnungsträgerbreiten anpassen zu können. Die Traktoren 8, 10 sind in an sich bekannter und deshalb nicht genauer dargestellter Weise als Riementraktoren ausgebildet, die über zwei im Abstand voneinander angeordnete Rollen laufen. Jede der Rollen ist jeweils auf einer der Halteschienen 4, 6 angeordnet, wobei eine dieser Rollen mit einem Antrieb verbunden, die andere frei drehend ist. Die die angetriebenen Rollen haltende Halteschiene, beispielsweise die Halteschiene 4, ist dann beispielsweise als Antriebswelle ausgebildet, auf der die zugeordneten Rollen drehfest angeordnet sind.

Die Riementraktoren 8, 10 sind mit Noppen 14 besetzt, die in bekannter Weise in Randlochungen des Aufzeichnungsträgers eingreifen.

Zwischen den Traktoren 8, 10 ist ein wellenförmig gebogener Bügel 16 angeordnet, welcher als Stützeinrichtung für den Aufzeichnungsträger dient. Die den Bügel 16 begrenzenden Hüllinien, die einerseits durch die einander zugewandten Innenseiten 18, 20 der Traktoren, andererseits durch die gestrichelten Linien 22, 24 dargestellt werden, bilden ein Rechteck, welches die Stützebene für den Aufzeichnungsträger definiert.

Wenn zur Anpassung der Transporteinrichtung an eine schmalere Breite des Aufzeichnungsträgers die Traktoren 8 und 10 in eine Stellung entsprechend Fig. 2 verstellt werden, wird der Bügel 16 elastisch zusammengedrückt. Die Stellung kleinster Aufzeichnungsträgerbreite ist dann erreicht, wenn der Bügel 16 zu einem weitgehend starren Block zusammengedrückt ist, wie Fig. 2 andeutet.

Wie die Fig. 1 und 2 weiter erkennen lassen, berührt der Bügel 16 die Stützebene längs einer kontinuierlichen Stützlinie, so daß der Aufzeichnungsträger bei jeder Einstellung der Traktoren über seine ganze Breite unterstützt wird.

Der Bügel 16 liegt mit seinen beiden Enden jeweils an den Traktoren 8 bzw. 10 federnd an, so daß der Bügel 16 den Verstellbewegungen der Traktoren 8, 10 automatisch folgt und sich an deren Stellung automatisch anpaßt.

Wie Fig. 3 erkennen läßt, besteht der Bügel 16 aus einem auf der Stützebene hochkant stehenden Band 26. Jeder Wellenzug des Bandes 26 ist mit als Durchbrechungen ausgebildeten Führungsösen 28, 30 versehen, die in zwei parallelen Reihen fluchtend hintereinander angeordnet sind. Das Band 26 ist mit den Führungsösen 28, 30 jeweils auf die Halteschienen 4, 6 aufgefädelt. Wie zu erkennen ist, umgeben die Führungsösen 28, 30 die zugeordneten Halteschienen 4, 6 mit Spiel, so daß sie sich in Längsrichtung der Halteschienen 4, 6 leicht verschieben können und so daß auch eine geringfügige Verschiebung in bzw. entgegen der Transportrichtung entsprechend dem Pfeil 32 möglich ist, die sich beim Zusammendrücken bzw. Auseinanderfedern des Bügels 16 ergibt. Das Spiel, mit dem die Führungsösen 28 die Halteschiene 4 umgeben, ermöglicht auch die Drehung dieser als Antriebswelle für die Traktoren 8, 10 dienenden Halteschiene 4.

**Patentansprüche**

1. Transporteinrichtung zum Transport eines Aufzeichnungsträgers durch einen Drucker, mit wenigstens einem in eine Randlochung des Aufzeichnungsträgers eingreifenden, in Breitenrichtung des Aufzeichnungsträgers verstellbaren Traktor und mit einer neben dem Traktor angeordneten, in Breitenrichtung federnd zusammendrückbaren Stützeinrichtung, dadurch **gekennzeichnet,** daß die Stützeinrichtung durch einen im wesentlichen in Breitenrichtung des Aufzeichnungsträgers sich erstreckenden, parallel zu einer zwischen der Transportrichtung und der Breitenrichtung aufgespannten Stützebene gebogenen Bügel (16) aus einem elastisch biegsamen Material gebildet ist.

2. Transporteinrichtung nach Anspruch 1, dadurch **gekennzeichnet,** daß der Bügel (16) die Stützebene längs einer kontinuierlichen Stützlinie berührt.

3. Transporteinrichtung nach Anspruch 1 oder 2, dadurch **gekennzeichnet,** daß der Bügel (16) wellenförmig mit einer in Breitenrichtung des Aufzeichnungsträgers verlaufenden Wellenachse gebogen ist.

4. Transporteinrichtung nach einem der Ansprüche 1 bis 2, dadurch **gekennzeichnet,** daß der Bügel (16) mit dem einem Traktor (8, 10) zugewandten Ende an diesem anliegt.

5. Transporteinrichtung nach einem der Ansprüche 1 bis 4, mit zwei auf wenigstens einer gemeinsamen Halteschiene angeordneten Traktoren, dadurch **gekennzeichnet,** daß der Bügel (16) zwischen den Traktoren (8, 10) federnd eingespannt ist.

6. Transporteinrichtung nach Anspruch 5, dadurch **gekennzeichnet,** daß der Bügel (16) an der gemeinsamen Halteschiene (4, 6) in Richtung der Schienenachse verschieblich geführt ist.

7. Transporteinrichtung nach Anspruch 6, dadurch **gekennzeichnet,** daß der Bügel (16) wenigstens eine in Erstreckungsrichtung verlaufende Reihe von miteinander fluchtenden Führungsösen (28, 30) aufweist, die auf eine zugeordnete Halteschiene (4, 6) aufgefädelt sind.

8. Transporteinrichtung nach Anspruch 7, mit zwei auf gemeinsamen, parallelen Halteschienen angeordneten Riementraktoren, dadurch **gekennzeichnet,** daß der Bügel (16) zwei parallele Reihen von jeweils miteinander fluchtenden, jeweils auf eine der Halteschienen (4, 6) aufgefädelten Führungsösen (28, 30) aufweist.

9. Transporteinrichtung nach einem der Ansprüche 1 bis 8, dadurch **gekennzeichnet,** daß der Bügel (16) aus einem auf der Stützebene hochkant stehenden Band (26) gebildet ist.

10. Transporteinrichtung nach Anspruch 9, dadurch **gekennzeichnet,** daß die Führungsösen (28, 30) als das Band (26) durchsetzende Durchbrechungen ausgebildet sind.

11. Transporteinrichtung nach einem der Ansprüche 7 bis 10, wobei eine Halteschiene als beiden Traktoren gemeinsame Antriebswelle ausgebildet ist, dadurch **gekennzeichnet,** daß zumindest die der Antriebswelle (4) zugeordneten Führungsösen (28) die Antriebswelle (4) mit allseitigem Spiel umgeben.

12. Transporteinrichtung nach einem der Ansprüche 7 bis 11, dadurch **gekennzeichnet,** daß die Führungsösen (28, 30) die Halteschienen (4, 6) mit Spiel in bzw. entgegen der Transportrichtung (Pfeil 32) umgeben.

13. Transporteinrichtung nach einem der Ansprüche 8 bis 12, dadurch **gekennzeichnet,** daß Form und Abmessungen des Bügels (16) derart sind, daß bei kleinstmöglichem Abstand der Riementraktoren die den Bügel begrenzenden Hüllinien (18, 20, 22, 24) die Form eines Rechteckes mit einer im wesentlichen dem Abstand der Traktoren (8, 10) entsprechenden Breite und einer der Länge der Traktoren (8, 10) entsprechende Länge ergeben.

## Claims

1. Transporting mechanism for transporting a recording carrier through a printer, having at least one tractor which engages in a marginal perforation of the recording carrier and can be adjusted in the width direction of the recording carrier, and having a supporting device which is arranged next to the tractor and can be resiliently compressed in the width direction, characterised in that the supporting device is formed by a bow (16) of a flexibly pliable material which extends essentially in the width direction of the recording carrier and is bent parallel to a supporting plane defined between the transporting direction and the width direction.

2. Transporting mechanism according to Claim 1, characterised in that the bow (16) touches the supporting plane along a continuous supporting line.

3. Transporting mechanism according to Claim 1 or 2, characterised in that the bow (16) is bent in a wave form with a wave axis running in the width direction of the recording carrier.

4. Transporting mechanism according to either of Claims 1 or 2, characterised in that the bow (16) bears with an end facing the one tractor (8, 10) against the said tractor.

5. Transporting mechanism according to one of Claims 1 to 4, having two tractors arranged on at least one common holding rail, characterised in that the bow (16) is clamped resiliently between the tractors (8, 10).

6. Transporting mechanism according to Claim 5, characterised in that the bow (16) is guided on the common holding rail (4, 6) displaceably in the direction of the rail axis.

7. Transporting mechanism according to Claim 6, characterised in that the bow (16) has at least one row, running in the direction of its extent, of mutually aligned guiding eyes (28, 30), which are threaded on an assigned holding rail (4, 6).

8. Transporting mechanism according to Claim 7, having two belt tractors arranged on common, parallel holding rails, characterised in that the bow (16) has two parallel rows of respectively mutually aligned guiding eyes (28, 30), respectively threaded on one of the holding rails (4, 6).

9. Transporting mechanism according to one of Claims 1 to 8, characterised in that the bow (16) is formed by a strip (26) standing upright on the supporting plane.

10. Transporting mechanism according to Claim 9, characterised in that the guiding eyes (28, 30) are formed as clearances passing through the strip (26).

11. Transporting mechanism according to one of Claims 7 to 10, one holding rail being designed as a drive shaft shared by the two tractors, characterised in that at least the guiding eyes (28) assigned to the drive shaft (4) surround the drive shaft (4) with play on all sides.

12. Transporting mechanism according to one of Claims 7 to 11, characterised in that the guiding eyes (28, 30) surround the holding rails (4, 6) with play in or against the transporting direction (arrow 32).

13. Transporting mechanism according to one of Claims 8 to 12, characterised in that the shape and dimensions of the bow (16) are such that, with the smallest possible distance between the belt tractors, the enveloping lines (18, 20, 22, 24) bounding the bow form the shape of a rectangle having a width corresponding essentially to the distance between the tractors (8, 10) and a length corresponding to the length of the tractors (8, 10).

**Revendications**

1. Dispositif d'entraînement pour l'entraînement d'un support d'enregistrement dans une imprimante, comportant au moins un dispositif tracteur qui engrène dans une perforation marginale du support d'enregistrement et est déplaçable dans le sens de la largeur du support d'enregistrement, et un dispositif d'appui disposé à côté du dispositif tracteur et pouvant être comprimé élastiquement dans le sens de la largeur, caractérisé par le fait que le dispositif d'appui est formé par un étrier (16) qui s'étend essentiellement dans le sens de la largeur du support d'enregistrement et est coudé parallèlement à un plan d'appui déterminé par la direction de transport et la direction de l'étendue en largeur et qui est réalisé en un matériau élastiquement flexible.

2. Dispositif de transport suivant la revendication 1, caractérisé par le fait que l'étrier (16) vient en contact avec le plan d'appui le long d'une ligne d'appui continue.

3. Dispositif de transport suivant la revendication 1 ou 2, caractérisé par le fait que l'étrier (16) est cintré selon une forme ondulée, un axe de l'ondulation s'étendant dans le sens de la largeur du support d'enregistrement.

4. Dispositif de transport suivant l'une des revendications 1 et 2, caractérisé par le fait que l'étrier (16) s'applique contre un dispositif tracteur (8,10), par son extrémité tournée vers ce dispositif.

5. Dispositif de transport suivant l'une des revendications 1 à 4, comportant deux dispositifs tracteurs disposés sur au moins un rail de retenue commun, caractérisé par le fait que l'étrier (16) est serré élastiquement entre les dispositifs tracteurs (8,10).

6. Dispositif de transport suivant la revendication 5, caractérisé par le fait que l'étrier (16) est guidé sur le rail de retenue commun (4,6) de manière à être déplaçable dans la direction de l'axe du rail.

7. Dispositif de transport suivant la revendication 6, caractérisé par le fait que l'étrier (16) possède au moins une série d'oeillets de guidage (28,30), qui s'étendent dans la direction d'extension, qui sont alignés les uns sur les autres et qui sont enfilés sur un rail de retenue associé (4,6).

8. Dispositif de transport suivant la revendication 7, comportant deux dispositifs tracteurs à courroies montés sur des rails de retenue communs et parallèles, caractérisé par le fait que l'étrier (16) comporte deux rangées parallèles d'oeillets de guidage (28,30) qui sont respectivement alignés les uns sur les autres et sont enfilés respectivement sur l'un des rails de retenue (4,6).

9. Dispositif de transport suivant l'une des revendications 1 a 8, caractérisé par le fait que l'étrier (16) est formé par une bande (26) disposée de chant sur le plan d'appui.

10. Dispositif d'entraînement suivant la revendication 9, caractérisé par le fait que les oeillets de guidage (28,30) sont réalisés sous la forme de perçages traversant la bande (26).

11. Dispositif d'entraînement suivant l'une des revendications 7 à 10, dans lequel un rail de retenue est réalisé sous la forme d'un arbre d'entraînement commun aux deux dispositifs tracteurs, caractérisé par le fait qu'au moins les oeillets de guidage (28) associés à l'arbre d'entraînement (4) entourent l'arbre d'entraînement (4) avec un jeu présent de tous côtés.

12. Dispositif d'entraînement suivant l'une des revendications 7 à 11, caractérisé par le fait que les oeillets de guidage (28,30) entourent les rails de retenue (4,6) avec un certain jeu dans ou à l'opposé de la direction d'entraînement (flèche 32).

13. Dispositif d'entraînement suivant l'une des revendications 8 à 12, caractérisé par le fait que la forme et les dimensions de l'étrier (16) sont telles que, pour la plus faible distance possible des dispositifs tracteurs à courroies, les lignes enveloppes (18,20,22,24), qui délimitent l'étrier, possèdent la forme d'un rectangle possédant une largeur qui correspond sensiblement à la distance entre les dispositifs tracteurs (8,10), et une longueur qui correspond à la longueur des dispositifs tracteurs (8,10).

Fig.1

Fig.2

Fig.3